# EUROPEAN PATENT APPLICATION

(11) **EP 2 757 295 A1**
(43) Date of publication of application: **23.07.2014**
(21) Application number: 12832293.0
(22) Date of filing: 03.08.2012
(51) Int. Cl.: F16J 15/34

(54) **MECHANICAL SEAL**

(30) Priority: 14.09.2011 JP 2011200726
(71) Applicant: Eagle Industry Co., Ltd., Minato-ku Tokyo 105-8587 (JP)
(72) Inventor: TAKAHASHI Hidekazu, Tokyo 105-8587 (JP)
(74) Representative: TBK
(86) International application number: PCT/JP2012/069791
(87) International publication number: WO 2013/038832

(57) **Abstract**

A mechanical seal is provided which aims to improve positioning precision of split bodies constituting a seal ring.

A mechanical seal is characterized in that: a rotation ring 110 is provided with a vertical surface 112 which is vertical to a central axis line of the rotation ring 110, and a tapered surface 113, a diameter on an outer circumferential side of which decreases away from the vertical surface 112; in that the plurality of split bodes are fixed in a state of being positioned by sandwiching an outer circumferential side of the rotation ring 110 between a support member 120 that supports a side of the vertical surface 112 and a presser member 130 that presses the tapered surface 113; and in that an elastic member 140 is disposed between the support member 120 and the vertical surface 112, so that the vertical surface 112 is supported through the elastic member 140, and a tapered surface 123 is pressed in direct surface contact with an inner circumferential tapered surface 137 of the presser member 130.

## Description

### TECHNICAL FIELD

The present invention relates to a mechanical seal including a split-type seal ring.

### BACKGROUND ART

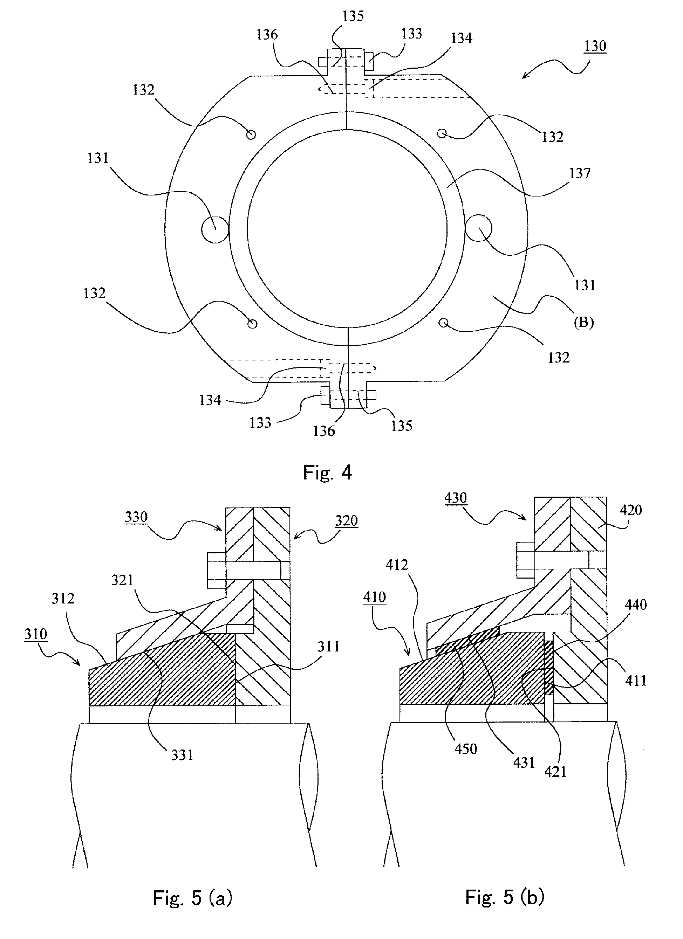

Regarding mechanical seals, a technique is known in which a seal ring is separated into split bodies in terms of the attach ability and the like and, when being attached at an attachment location, these separated split bodies are joined together to constitute the annular seal ring. In general, a seal ring in a mechanical seal is configured of ceramic (plastic material) such as SiC, alumina or the like. In such a case, split bodies cannot be fixed to one another with fastening tools such as bolts. Therefore, a structure is employed in which a plurality of split bodes are positioned and fixed by using a plurality of members. Hereinafter, a description will be given of a fixing structure for a split-type seal ring according to a conventional example with reference to Fig. 5.

In a split-type seal ring 310 illustrated in Fig. 5(a), two split bodies that constitute a split-type seal ring 310 are fixed in the state of being positioned by a support member 320 and a presser member 330. In more detail, in the state where a vertical surface 311 which is vertical to a central axis line of a seal ring in the split-type seal ring 310 is supported by an end surface 321 of the support member 320, an outer circumferential tapered surface 312 is pressed by an inner circumferential tapered surface 331 of the presser member 330. In this way, the two split bodies are fixed in the state of being positioned. Here, this split-type seal ring 310 employs a configuration in which the vertical surface 311 comes into direct and close surface contact with the end surface 321 of the support member 320, and the tapered surface 312 also comes into direct and close surface contact with the inner circumferential tapered surface 331 of the presser member 330.

In a split-type seal ring 410 illustrated in Fig. 5(b), similarly to the split-type seal ring 310 illustrated in (a) of the same figure, an outer circumferential tapered surface 412 is pressed by an inner circumferential tapered surface 431 of a presser member 430 in the state where a vertical surface 411 which is vertical to a central axis line of a seal ring in the split-type seal ring 410 is supported by an end surface 421 of a support member 420. In this way, the two split bodies are fixed in the state of being positioned. Here, this split-type seal ring 410 employs a configuration in which elastic members 440 and 450 are provided between the vertical surface 411 and the end surface 421 of the support member 420 and between the tapered surface 412 and the inner circumferential tapered surface 431 of the presser member 430, respectively.

In the case of the split-type seal ring 310 illustrated in Fig. 5(a), the two split bodies are directly fastened by the support member 320 and the presser member 330. Therefore, when the fastening force is excessively increased, the warping is created and a step height is developed in the separated parts, which becomes a cause of leakage. Meanwhile, when the fastening force is decreased in order to avoid such a disadvantage, the pressure of a sealed target fluid may cause the leakage between the separated parts.

In the case of the split-type seal ring 410 illustrated in Fig. 5(b), there is no concern about warping as described above because the two split bodies are fastened by the vertical surface 411 and the tapered surface 412 through the elastic members 440 and 450. However, since both of the vertical surface 411 and the tapered surface 412 are fastened through the elastic members 440 and 450, the attitude of the split-type seal ring 410 is hardly stable and inclined, thereby causing the lowering of the sealing property.

### CITATION LIST

### PATENT LITERATURE

Patent Literature 1: Japanese Patent Application Laid-Open No. 04-185976
Patent Literature 2: Japanese Patent Application Laid-Open No. 2010-19373

### SUMMARY OF INVENTION

### TECHNICAL PROBLEM

An object of the present invention is to provide a mechanical seal that aims to improve positioning precision of split bodies that constitute a seal ring.

### SOLUTION TO PROBLEM

The present invention has employed the following means in order to solve the above disadvantage.

Specifically, a mechanical seal of the present invention is characterized in that:
in the mechanical seal which includes a split-type seal ring in which an annular seal ring is formed by joining separated split bodies (including two split bodies, and three or more separated split bodies) together,
the seal ring is provided with a vertical surface which is vertical to a central axis line of the seal ring, and a tapered surface, a diameter on an outer circumferential side of which decreases away from the vertical surface;
the plurality of split bodes are fixed in a state of being positioned, by sandwiching an outer circumferential side of the seal ring between a support member that supports a side of the vertical surface and a presser member that supports the tapered surface; and
an elastic member is disposed between the support member and the vertical surface, so that the vertical surface is supported through the elastic member, and the tapered surface is supported in direct surface contact with an inner circumferential tapered surface of the presser member.

According to the present invention, the seal ring is supported while the tapered surface provided on the outer circumferential side thereof is in direct surface contact with the inner circumferential tapered surface of the presser member. Thus, the seal ring is positioned adequately in both the axial and radial directions. In addition, since the vertical surface of the seal ring is supported by the support member through the elastic member, the warping of the seal ring is suppressed even when the presser member presses the seal ring with a relatively great force. Accordingly, a step height is suppressed from being created in the separated parts.

It is preferable that the tapered surface has a diameter that increases toward a sliding surface of the seal ring.

Therefore, as the fluid pressure of a sealsed target fluid increases, a reaction force applied to the tapered surface acts in a direction of increasing the fastening force for the split bodies.

It is preferable that the mechanical seal seals the sealed target fluid on the inner circumferential side and the vertical surface and the tapered surface are provided at locations not to come into contact with the sealed target fluid.

For example, by providing the vertical surface and the tapered surface on the outer circumferential side of the seal ring so as to provide these vertical and tapered surfaces outside a region sealed by the seal ring (and another seal), the vertical surface and the tapered surface can be prevented from coming into contact with the sealed target fluid. Incidentally, the word "another seal" refers to, for example, a seal that hermetically seals a gap between the seal ring and a counter member to which the seal ring is attached (housing or shaft).

Thus, the fastened parts of the split bodies are not affected by the sealed target fluid.

### ADVANTAGEOUS EFFECT OF INVENTION

As described above, with the present invention, the split bodies that constitute the seal ring can be positioned with improved precision.

### BRIEF DESCRIPTION OF DRAWINGS

Fig. 1 is a schematic cross-section view illustrating an attached state of a mechanical seal according to an embodiment of the present invention.
Fig. 2 is a schematic plan view illustrating a rotation ring according to the embodiment of the present invention.
Fig. 3 is a plan view illustrating a support member according to the embodiment of the present invention.
Fig. 4 is a plan view illustrating a presser member according to the embodiment of the present invention.
Fig. 5 (a) and (b) are schematic cross-section view illustrating a structure for fixing a split-type seal ring according to a conventional example.

### DESCRIPTION OF EMBODIMENT

Hereinafter, with reference to the drawings, an embodiment of the present invention will be described in detail and in an exemplifying manner. It should be noted that this embodiment does not intend to limit the scope of the present invention as to dimensions, materials, shapes, relative arrangement, and the like of components described therein, unless otherwise specified.

### (Embodiment)

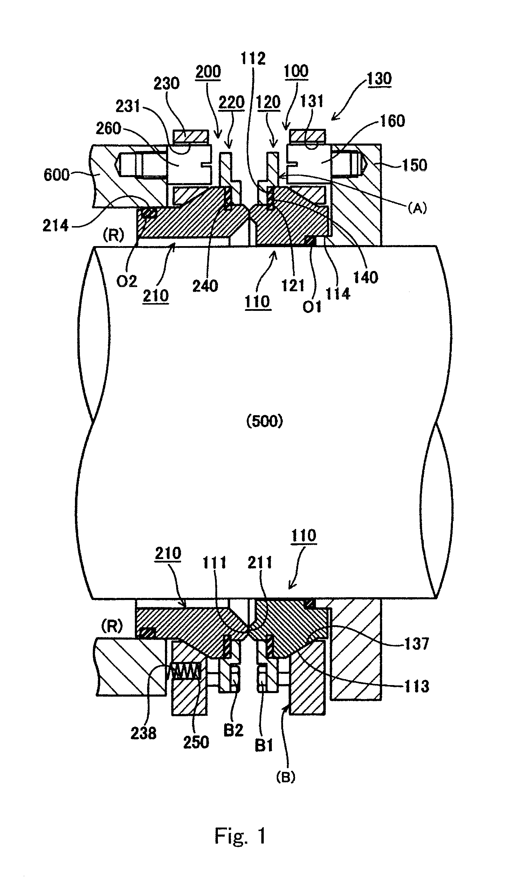

A mechanical seal according to the embodiment of the present invention will be described with reference to Figs. 1 to 4.

### <Mechanical Seal>

A description will be given of an overall configuration and the like of a mechanical seal according to the embodiment of the present invention, in particular, with reference to Fig. 1. Fig. 1 is a schematic cross-section view illustrating an attached state of a mechanical seal according to the embodiment of the present invention. Incidentally, the mechanical seal in Fig. 1 is illustrated as a cross section obtained by cutting out a plane passing through a central axis line of a rotation shaft, but the cut location (cut location in the circumferential direction) is changed as necessary for the sake of descriptive convenience. Specifically, the cut location is changed as appropriate so as to illustrate characteristic portions of a plurality of members constituting the mechanical seal or parts of the members.

The mechanical seal according to this embodiment is an outside-mechanical seal that includes a rotation ring unit 100 and a stationary ring unit 200. Specifically, a mechanical seal prevents a sealed target fluid (R) hermetically sealed in an annular gap between a rotation shaft 500 and a housing 600 from leaking to the outer circumferential side from the inner circumferential side. In addition, the mechanical seal according this embodiment is a stationary-mechanical seal, and an actuation portion such as a spring or the like is provided on the stationary ring side.

The rotation ring unit 100 includes a rotation ring 110 that acts as an annular seal ring, a support member 120 and a presser member 130 that both position and fix the rotation ring 110, and an annular elastic member 140 provided between the rotation ring 110 and the support member 120. The rotation ring 110 is a split-type seal ring in which an annular seal ring is constituted by joining two separated split bodies together, and the outer circumferential side thereof is sandwiched between the support member 120 and the presser member 130 such that the two split bodies are fixed in the state of being positioned. Here, the support member 120 is fixed to the presser member 130 with bolts B1.

The rotation ring unit 100 configured in the above manner is attached to the rotation shaft 500. Specifically, by inserting drive pins 160, which are attached to a collar 150 fixed to the rotation shaft 500, into through-holes 131 provided in the presser member 130, the rotation ring unit 100 is attached to the rotation shaft 500. Moreover, a step portion 114 is formed on the inner circumferential side of the rotation ring 110, and an O-ring O1 is attached on this step portion 114, thereby hermetically sealing an annular gap between the outer circumferential surface of the rotation shaft 500 and the inner circumferential surface of the rotation ring 110.

Similarly to the rotation ring unit 100, the stationary ring unit 200 also includes a stationary ring 210 that acts as an annular seal ring, a support member 220 and a presser member 230 that both position and fix the stationary ring 210, and an annular elastic member 240 provided between the stationary ring 210 and the support member 220. The stationary ring 210 is a split-type seal ring in which an annular seal ring is constituted by joining two separated split bodies together, and the outer circumferential side thereof is sandwiched between the support member 220 and the presser member 230 such that the two split bodies are fixed in the state of being positioned. Here, the support member 220 is fixed to the presser member 230 with bolts B2.

The stationary ring unit 200 configured in the above manner is attached to the housing 600. Specifically, by inserting drive pins 260, which are attached to the end surface of the housing 600, into through-holes 231 provided in the presser member 230, the stationary ring unit 200 is attached to the housing 600. Moreover, an annular groove 214 is formed on the outer circumferential side of the stationary ring 210, and an O-ring 02 is attached in this annular groove 214, thereby sealing an annular gap between the inner circumferential surface of the housing 600 and the outer circumferential surface of the stationary ring 210.

The presser member 230 is provided with support holes 238 for supporting springs, and springs 250 are attached in these support holes 238. Thus, the stationary ring unit 200 is pressed toward the side of the rotation ring unit 100. Thus, relative to the housing 600, the stationary ring unit 200 is configured to be suppressed from moving due to the drive pin 260 in the rotational direction, but to be movable in the axial direction. Furthermore, since the stationary ring unit 200 is pressed toward the rotation ring unit 100, a seal end surface 111 of the rotation ring 110 and a seal end surface 211 of the stationary ring 210 are not separated from each other. In this case, both of the seal end surface 111 of the rotation ring 110 and the seal end surface 211 of the stationary ring 210 are configured to be tapered toward the end thereof, and each seal width is set to approximately 1 mm to 3 mm.

According to the mechanical seal configured in the above manner, along with the rotation of the rotation shaft 500, the rotation ring unit 100 also rotates, and the seal end surface 111 of the rotation ring 110 slides over the seal end surface 211 of the stationary ring 210 while keeping in contact with the seal end surface 211. Therefore, it is possible to suppress the sealed target fluid (R) from leaking to the outer circumferential side. In addition, the respective gaps between the outer circumferential surface of the rotation shaft 500 and the inner circumferential surface of the rotation ring 110 and between the inner circumferential surface of the housing 600 and the outer circumferential surface of the stationary ring 210 are hermetically sealed by the O-rings O1 and O2 as described above. Thus, the sealed target fluid (R) is also suppressed from leaking through these gaps. With the configuration as described above, members of the mechanical seal according to this embodiment which come into contact with the sealed target fluid (R) are limited to the rotation ring 110, the stationary ring 210, and the O-rings O1 and 02.

### <Constituting Member of Mechanical Seal>

The members constituting the mechanical seal will be described in more detail with reference to Figs. 1 to 4. Of circular annular members constituting the mechanical seal according to this embodiment, each of the members aside from the O-rings O1 and 02 and the elastic members 140 and 240 has a double split structure in view of (in accordance with the necessity of) their attach abilities, in which an annular member is made by joining two split bodies together. Incidentally, each of the O-rings O1 and 02 and the elastic members 140 and 240 has a structure in which a cut portion (miter) is provided at one location in the circumferential direction.

The rotation ring unit 100 and the stationary ring unit 200 are identical in a basic configuration. In other words, the rotation ring 110 constituting the rotation ring unit 100 and the stationary ring 210 constituting the stationary ring unit 200 have the similar configurations regarding a functional part although having different cross section shapes. In addition, the support member 120 constituting the rotation ring unit 100 and the support member 220 constituting the stationary ring unit 200 use exactly the same part. Further, the presser member 130 constituting the rotation ring unit 100 and the presser member 230 constituting the stationary ring unit 200 use exactly the same part. Accordingly, in the following description, only constituting parts on the side of the rotation ring unit 100 will be described for the sake of simplifying the description.

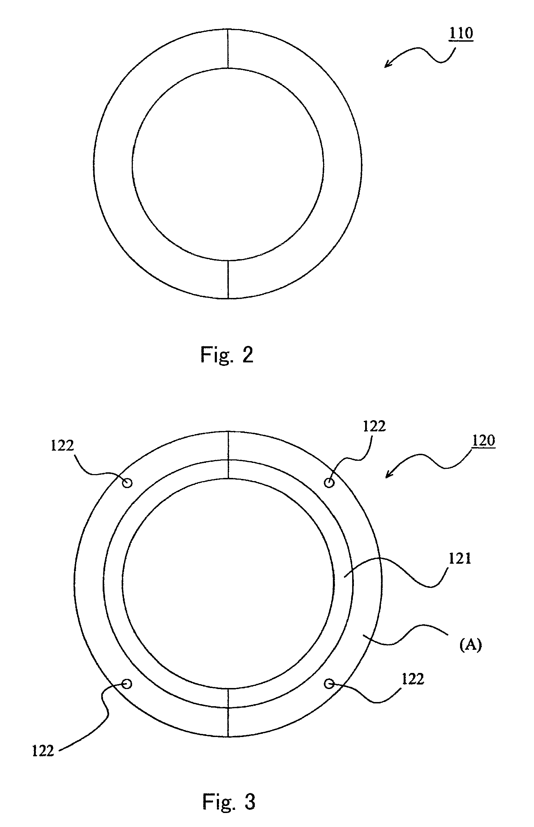

Fig. 2 is a schematic plan view illustrating the rotation ring 110. This rotation ring 110 is configured of ceramic (plastic material) such as SiC, alumina or the like. This rotation ring 110 is configured of two split bodies into which the annular member is separated by, for example, being pulled. Moreover, the rotation ring 110 is provided with a vertical surface 112 that is vertical to the central axis line (aligned with that of the rotation shaft 500) of the rotation ring 110, and a tapered surface 113, a diameter on the outer circumferential side of which decreases away from the vertical surface 112 (refer to Fig. 1). Incidentally, similarly to the rotation ring 110, the stationary ring 210 is also configured of ceramic (plastic material) and provided with a vertical surface and a tapered surface, although a detailed description thereof is omitted (refer to Fig. 1).

Fig. 3 is a plan view illustrating the support member 120. The support member 120 is a metal member, and the annular member is configured by joining the two split bodies together. The support member 120 is provided with a support surface 121 that supports the vertical surface 112 of the rotation ring 110, and a plurality of through-holes 122. The support surface 121 is configured of a plane that is vertical to the central axis line of the rotation shaft 500. The respective axial parts of the above bolts B1 are inserted into and pass through the plurality of through-holes 122. Incidentally, a part used in the support member 220 of the stationary ring unit 200 is the same as that of the support member 120, as described above.

Fig. 4 is a plan view illustrating the presser member 130. The presser member 130 is a metal member, and the annular member is configured by joining the two split bodies together. The presser member 130 is provided with through-holes 131 into which the drive pins 160 are to be inserted, screw holes 132 into which the screw parts of the bolts B1 are to be screwed, bolts 133 and 134 for fixing the split bodies, and screw holes 135 and 136 for these bolts 133 and 134. In addition, a tapered surface 137 is provided on the inner circumferential side of the presser member 130.

The two split bodies that constitute this presser member 130 are fixedwith the bolts 133 and 134 as described above. One of these bolts 133 and 134 is a reamer bolt, and when the two split bodies are integrated, the pressure member 130 fulfills a function similar to that of a member composed of a single part. The above tapered surface 137 is subjected to an ultraprecise surface finish in the state where the two split bodies are integrated. In more detail, this tapered surface 137 is finished precisely such that the tapered angle thereof becomes the same as that of the outer circumferential tapered surface 113 of the rotation ring 110.

Although being not illustrated in the plan view, the elastic member 140 is configured of a resin material such as PTFE or the like. This elastic member 140 has the cut portion (miter) at the one location in the circumferential direction, and this cut portion is made to mate, so that the annular member is constituted. Furthermore, this elastic member 140 is attached in the annular groove provided along the inner circumferential side of the vertical surface 112 in the rotation ring 110. Incidentally, the same applies to the elastic member 240 constituting the stationary ring unit 200, and the same part as that of the elastic member 140 is used.

When the rotation ring unit 100 is assembled, first, the annular rotation ring 110 is formed by joining the two split bodies together, and the elastic member 140 is attached on the vertical surface 112 of the rotation ring 110 so as to come into contact with the vertical surface 112. In this state, the presser member 130 is assembled such that the tapered surface 137 of the presser member 130 is directly brought into surface contact with the tapered surface 113 of the rotation ring 110. Then, the support member 120 is fixed to this presser member 130 with the bolts B1. As a result, the outer circumferential side of the rotation ring 110 is sandwiched between the support member 120 that supports the side of the vertical surface 112 and the presser member 130 that supports the tapered surface 113, so that the two split bodies (two split bodies constituting the rotation ring 110) are fixed in the state of being positioned. In addition, in the rotation ring 110 according to the embodiment, by placing the elastic member 140 between the support member 120 and the vertical surface 112, the vertical surface 112 is supported through the elastic member 140. Here, the tapered surface 113 of the rotation ring 110 is supported in direct surface contact with the inner circumferential tapered surface 137 of the presser member 130. Incidentally, the assembling of the stationary ring unit 200 is also similar to that of the rotation ring unit 100.

### <Advantageous Points of Mechanical Seal according to this Embodiment>

According to the mechanical seal according to the embodiment, the rotation ring 110 and the stationary ring 210 that act as a seal ring are supported while the tapered surfaces provided on the outer circumferential side thereof are in direct surface contact with the tapered surfaces on the inner circumferential sides of the presser members 130 and 230. As a result, the rotation ring 110 and the stationary ring 210 are positioned in both the axial and radial directions adequately. Consequently, it is possible to suppress the misalignment of the rotation ring 110 and the stationary ring 210, such as inclining thereof and the like.

The vertical surfaces of the rotation ring 110 and the stationary ring 210 are supported by the support members 120 and 220 through the elastic members 140 and 240. Accordingly, even when the rotation ring 110 and the stationary ring 210 are pressed by the presser members 130 and 230 with a relatively great force, the warping thereof can be suppressed. This can suppress a step height from being created in the separated parts. Further, this can allow for the error of a fastening force. Moreover, this can also allow for the variation in a force applied to the rotation ring 110 and the stationary ring 210 (a force acting to separate the two split bodies) along with the variation in the fluid pressure of the sealed target fluid (R).

In the mechanical seal according to the embodiment, members that come into contact with the sealed target fluid (R) are limited to the rotation ring 110, the stationary ring 210, and the O-rings O1 and O2, and the vertical and tapered surfaces of the rotation ring 110 and the stationary ring 210 are provided at locations not to come into contact with the sealed target fluid (R). Therefore, the fastened parts of the two split bodies constituting each of the rotation ring 110 and the stationary ring 210 are not affected by the sealed target fluid (R). Consequently, problems do not arise in that: the precision of the fastened surfaces is lowered due to the contact with the sealed target fluid (R); slurry contained in the sealed target fluid (R) enters into the fastened surfaces; and the elastic members 140 and 240 are deteriorated due to the sealed target fluid (R).

In the mechanical seal according to the embodiment, the tapered surface on the outer circumferential side of each of the rotation ring 110 and the stationary ring 210 is configured such that a diameter thereof increases toward the sliding surface (sliding surface for the seal end surface 111 or 211). Thus, as the fluid pressure of the sealed target fluid (R) increases, the reaction force applied to each tapered surface acts to increase the fastening force for the two split bodies that constitute each of the rotation ring 110 and the stationary ring 210. Consequently, the sealing property can be further enhanced.

### REFERENCE SIGNS LIST

- 100: rotation ring unit
- 110: rotation ring
- 111, 211: seal end surface
- 112: vertical surface
- 113: tapered surface
- 114: step portion
- 120, 220: support member
- 121: support surface
- 122: through-hole
- 123: tapered surface
- 130, 230: presser member
- 131: through-hole

- 132: screw hole
- 133, 134: bolt
- 135, 136: screw hole
- 137: tapered surface
- 140, 240: elastic member
- 150: collar
- 160: drive pin
- 200: stationary ring unit
- 210: stationary ring
- 214: annular groove
- 231: through-hole
- 238: support hole
- 250: spring
- 260: drive pin
- 500: rotational axis
- 600: housing

## Claims

1. A mechanical seal comprising a split-type seal ring in which an annular seal ring is formed by joining separated split bodies together,
wherein the seal ring is provided with a vertical surface which is vertical to a central axis line of the seal ring, and a tapered surface, a diameter on an outer circumferential side of which decreases away from the vertical surface,
the plurality of split bodes are fixed in a state of being positioned by sandwiching an outer circumferential side of the seal ring between a support member that supports a side of the vertical surface and a presser member that supports the tapered surface, and
an elastic member is disposed between the support member and the vertical surface, so that the vertical surface is supported through the elastic member, and the tapered surface is supported in direct surface contact with an inner circumferential tapered surface of the presser member.

2. The mechanical seal according to claim 1, wherein the tapered surface has a diameter that increases toward a sliding surface of the seal ring.

3. The mechanical seal according to claim 1 or 2, wherein the mechanical seal seals a sealed target fluid on the inner circumferential side, and the vertical surface and the tapered surface are provided at locations not to come into contact with the sealed target fluid.
